Europäisches Patentamt

European Patent Office

Office européen des brevets

(11) Publication number: **0 052 993**

**A1**

## (12) EUROPEAN PATENT APPLICATION

(21) Application number: **81305420.2**

(22) Date of filing: **17.11.81**

(51) Int. Cl.³: **F 16 C 7/00**
**B 62 D 19/00, B 60 G 3/00**

(30) Priority: **22.11.80 GB 8037539**
**20.05.81 GB 8115540**

(43) Date of publication of application:
**02.06.82 Bulletin 82/22**

(84) Designated Contracting States:
**BE DE FR IT NL SE**

(71) Applicant: **DUNLOP LIMITED**
**Dunlop House Ryder Street St. James's**
**London SW1Y 6PX(GB)**

(72) Inventor: **Wood, John Oswald**
**108 Dostill Road Two Gates**
**Tamworth Staffs, B77 1JB(GB)**

(72) Inventor: **Morris, Ralph Franklin**
**2 Fox's Court Fenny Drayton**
**Nuneaton CV13 6BG(GB)**

(74) Representative: **Waller, Roy Ernest Sykes et al,**
**Group Patent Department Dunlop Limited 2 Parade**
**Sutton Coldfield West Midlands B72 1PF(GB)**

(54) **Improvements in and relating to load transmission members.**

(57) A load transmission member, suitable for use as a vehicle suspension strut, is capable of withstanding both tensile and compressive loads and is of lighter weight than conventionally achievable.

The member comprises a pair of end location elements for transmission of load to or from the member, a compression-resistant first load bearing component extending between the end elements, and a tension resistant second load bearing component of filamentary reinforced matrix material extending between and around the end elements.

FIG.1

1.

IMPROVEMENTS IN AND RELATING TO LOAD

TRANSMISSION MEMBERS

This invention relates to load transmission members and in particular, though not exclusively, to load transmission members for use in vehicles.

Load transmission members are required generally to be as light as possible in weight in order to achieve economy in the use of materials, and in the case of vehicle suspensions to achieve good performance characteristics of the suspension.

However, reduction in weight both by design of the shape of the load transmission member and selection of the materials from which it is constructed is generally significantly restricted by the need for the member to be able to sustain a combination of two or more types of loading, i.e. tensile, compressive or torsional stresses.

The present invention seeks to provide an improved load transmission member of a kind able to sustain a combination of at least two types of loading.

In accordance with one aspect of the present invention a load transmission member comprises a pair of end location elements for transmission of load to or from the member, a first load bearing component extending between said location elements to transmit compressive forces therebetween, and a second load bearing component of filamentary reinforced matrix material extending between and around said location elements for the transmission of tensile forces therebetween.

The second load bearing component preferably is substantially in the form of an endless belt which extends around the end location elements and which has the reinforcing filaments thereof disposed substantially parallel to the direction of the length of the belt. The first load bearing component may lie between the portions of the second load bearing component which extend between the end location elements, and preferably said first component also is formed of a filamentary reinforced material.

Preferably the first and second load bearing components are spaced from one another so as to avoid direct relative movement therebetween during stressing of either of the components. The load bearing components may be maintained in spaced relationship by rubber or other flexible, and preferably resilient, material which may be united to one or both of said load bearing components. The provision of a high hysteresis material positioned between and bonded to the first and second components is particularly beneficial when it is required to dampen unwanted vibrations, whilst for applications in which the weight of the load transmission member is to be kept to a minimum the spacing material may be a foam type material.

Rubber or other flexible, and preferably resilient, material may be used also to form, at least in part, the end location elements or interconnect them with the load bearing components. Preferably said flexible or resilient material is provided in such manner that the load transmission member is able to withstand at least some degree of torsional strain about an axis extending between the end location elements.

The filamentary reinforcement preferably is in long length filament form and may be applied in monofilament or strand (twisted or untwisted) form. Alternatively the filamentary material may be in the form of fibres, the fibres being united in strand form to facilitate construction of a load bearing component of the required shape. Where the filamentary material is in strand form, the degree of twist in the strand preferably os of a low order so as to facilitate penetration of the strand by matrix material in which it is embedded. Suitable materials for the filamentary material include: natural fibres such as jute and cotton; glass; carbon; boron; polyamides; polyester; polyvinyl alcohol; metallic materials and aromatic polyamides, including Kevlar. The filamentary material may be a composite such as a metal reinforced metal.

The matrix material in which the filamentary reinforcement is embedded may be applied to the reinforcement either by dipping or coating of the filamentary material prior to constructing the load bearing component in the required shape or alternatively the matrix material may be applied to the filamentary material when the latter has been, at least in part, laid in the required position for forming the component. The matrix material may embed and/or effect a bond with the filamentary material.

Suitable matrix materials include polymeric materials such as polyester, vinyl esters, polyether sulphones, and epoxy resins such as thermosetting epoxy resin, which are appropriate for the manufacture of a rigid load bearing component. Other suitable materials are concrete, ceramics, carbon or metallic materials. Where the component is required to possess a not insignificant degree of flexibility or resiliency a matrix of for example hard natural rubber may be employed. For the second load bearing component which does not require to be able to resist compression loads use may be made of a substantially flexible material such as rubber.

The load transmission member may be of a pre-stressed type construction. In one method of constructing a member of this type the end location elements may be urged towards one another, thereby compressing the first load bearing component, whilst a preformed endless belt, constituting the second load bearing component, is fitted into position to extend, without slack, between and around the end location elements. Subsequent to release of the externally applied force urging the end location elements towards one another the first load bearing member extends slightly, thus reducing the stress therein and resulting in a balancing tensile stress in the second load bearing component.

It is not essential that the second load bearing component is in the form of an endless belt, but this type of construction facilitates assembly particularly where it is required that the load transmission member be pre-stressed. For such constructions it is useful also to provide an endless belt comprising reinforcing filaments which are embedded in a matrix of a substantially flexible material, such as rubber. However, substantially inflexible matrix materials, such as epoxy resins, may be used, with the endless belt being preformed so as to be a close fit over the end location elements when said elements are urged one towards the other.

Ease of assembly may be assisted further by providing the end location elements with resilient bushes of a kind having an outer substantially rigid housing over which the second load bearing component may be slid into position more easily than if contacting a surface of rubber or like material.

Embodiments of the invention will now be described, by way of example, with reference to the accompanying diagrammatic drawings in which:-

Figure 1 is a longitudinal sectional view of end parts of a load bearing member in accordance with the present invention;

Figure 2 is a sectional view of part of the member of Figure 1 taken on the line II-II of the left-hand end part of Figure 1;

Figure 3 is a longitudinal sectional view of an end part of another load bearing member in accordance with the present invention;

Figure 4 is a longitudinal sectional view of end parts of a load bearing member in accordance with the present invention;

Figure 5 is a sectional view of part of the member of Figure 4 taken on the line V-V of the left-hand part of Figure 4;

Figure 6 is a sectional view on the line VI-VI of Figure 4, and

Figure 7 is a longitudinal sectional view of yet another load bearing member in accordance with the present invention.

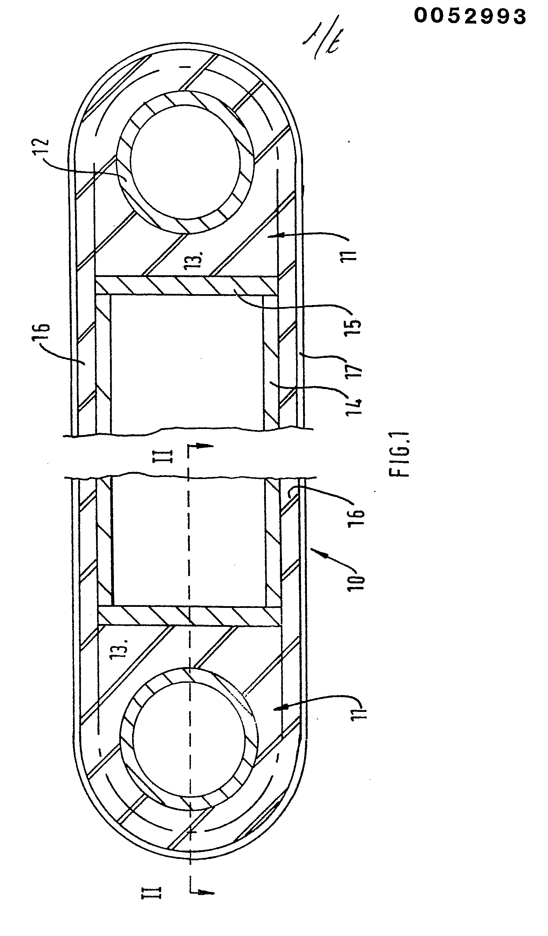

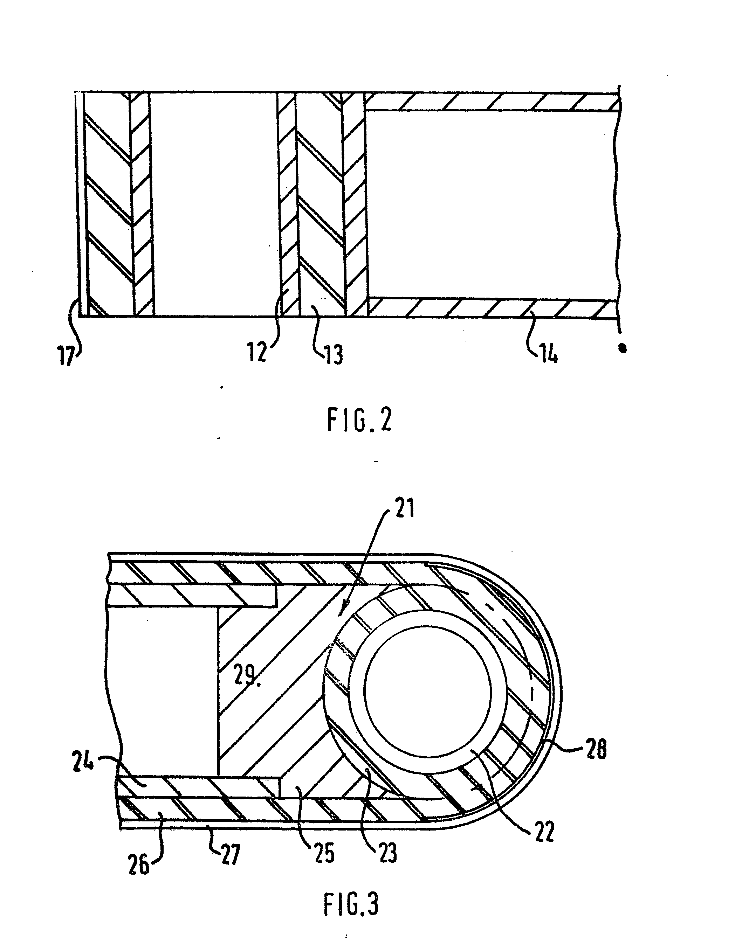

A load transmission member in the form of a vehicle suspension control link 10, of a kind intended to be able to withstand tensile and compressive loads of substantially similar magnitude, is shown in Figures 1 and 2. The link 10 has a length in the order of 8 times its thickness as viewed in Figure 1.

The control link is intended, in use, to interconnect between two parts of a vehicle suspension by means of end location elements 11 each comprising a steel bush 12 embedded in and bonded to a resilient support 13 of natural rubber.

Said end location elements are maintained spaced apart by a first load bearing component 14 in the form of a hollow, substantially square section tube, formed of a glass filamentary reinforced plastics material, said material being described in more detail below.

Each end face of the tubular component 14 lies perpendicular to the tube length and is abutted by one of a pair of steel load distribution plates 15 of a shape and size corresponding to the outer cross-sectional profile of the tube. Said steel plates are bonded to the resilient supports 13 of the end location elements.

Two strip-like layers 16 of natural rubber are formed integral with the resilient supports 13 and extend therebetween respectively alongside opposite faces of the tubular member 14, said strips of rubber being bonded to the tube such that said tube, and the steel plates 15 are thereby supported relative to the steel bushes 12. Said layers 16 of rubber extend along those two faces of the tube 14 which lie in planes parallel to the longitudinal axes of the steel bushes.

The afore-described assembly is surrounded by an outer endless band 17 of glass filament reinforced plastics material which is bonded to the rubber layers 16 and the resilient supports 13 of the end location elements. Typically the outer band 17 of glass reinforced plastics material is constructed by a wet lay-up technique.

The glass filament reinforced plastics material used to form the compression resisting component 14 and tension band 17 comprises E glass rovings at 60% by volume embedded in an epoxy type matrix at 40% by volume, the glass filaments being laid parallel to the tube length with the filaments substantially uniformly distributed.

In use of the afore-described control link any tensile loadings acting between the end location elements are withstood by the outer band 17 of glass reinforced plastics material which extends around said end location elements. Extension of the outer band relative to the compression resisting tube 11 is accommodated by the intervening rubber layers 16.

Compression loads acting between the end location members are transmitted and withstood by the hollow tube 14, with the steel plates 12 at the ends of these serving to transmit to the periphery of the tube loads exerted by the solid cross-section resilient supports 13 of the end location members.

Any relative torsional movement along the length of the tube, due for example to particular movements of a vehicle suspension, are accommodated by the resilient supports 13 of the end location members.

In a second embodiment of the invention (shown in Figure 3), a control link is constructed substantially similar to that shown in Figures 1 and 2 except that the end location elements are of a modified design.

The end location element 21 comprises a steel bush 22 around which is bonded a uniformly shaped cylindrical sleeve 23 of natural rubber.

A saddle shaped end plate member 25 is then bonded to part of the outer surface of the sleeve 23. The end member may be of plastics material, e.g. nylon, and formed in situ by an injection moulding process during which the plastics material become fushion bonded to the rubber sleeve.

The assembly of the bush, sleeve and end member is then positioned with the stepped side 29 of the end member in register with an end of the compression tube 24, a similar assembly positioned against the other end of the tube, and a band 26 of natural rubber wound around the part assembly so formed with the ends of the band in abutting relationship.

Semi-cylindrical metal end shims 28 are then fitted to the curved surfaces of the rubber band 26 (optionally said sleeves each have a pair of side flanges which are arranged to overlie and restrain outward bulging of the rubber band 26), and an endless band 27 of glass filament reinforced plastics then constructed in the same manner as described in respect of the preceding embodiment. The provision of shims 28 is believed to be useful in ensuring a greater uniformity of distribution of stress between the rubber band 26 and plastics band 27 than if said shims were not present.

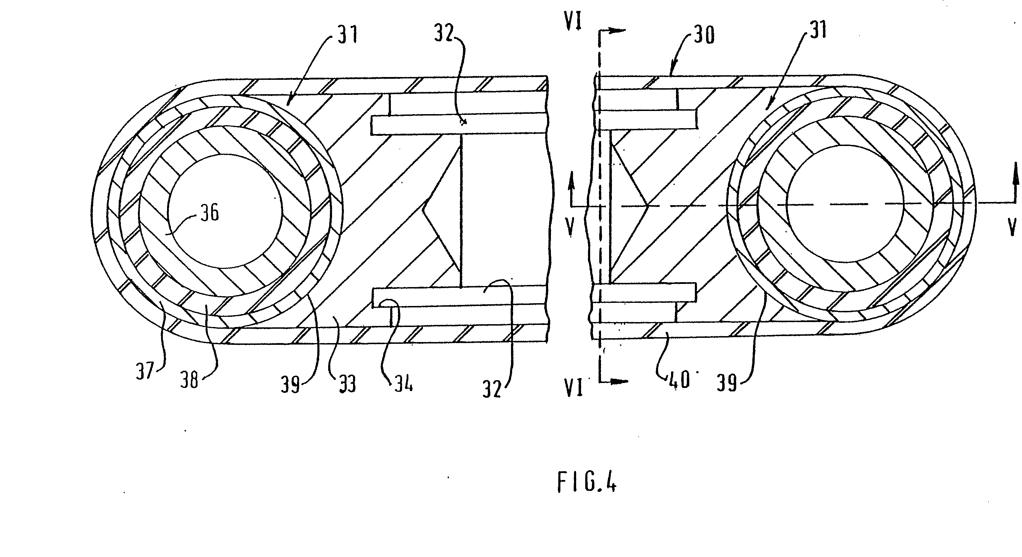

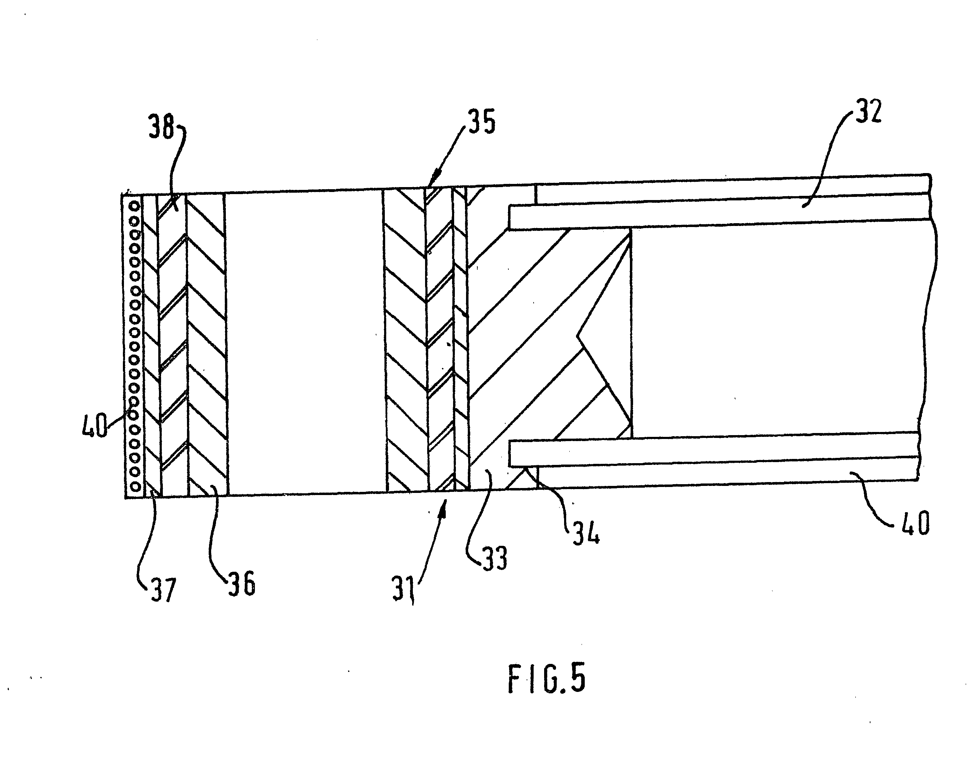

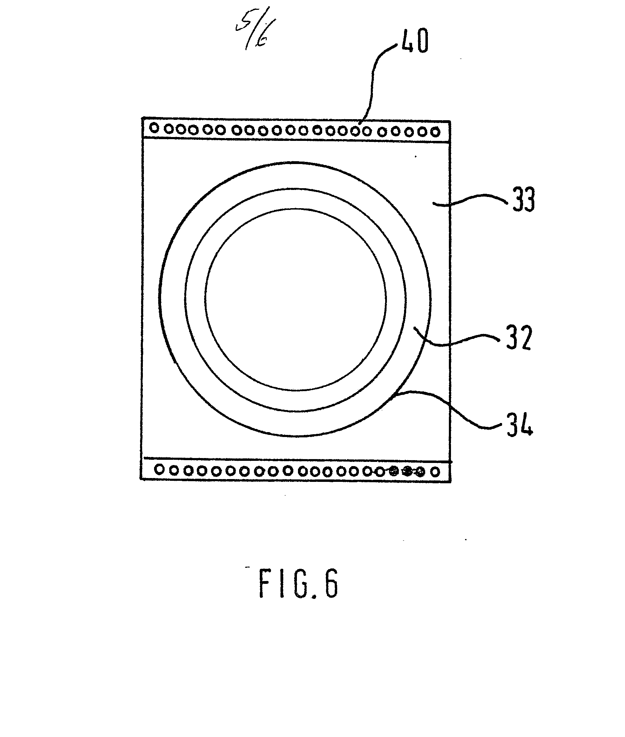

A third embodiment of the invention, illustrated in Figures 4-6, has some similarities with the aforedescribed constructions but differs in certain other important respects.

A load transmission member 30 of a kind intended to withstand both tensile and compressive loads has a length in the order of 8 times its overall thickness as viewed in Figure 4.

The control link is provided with a pair of end location elements 31 which may be used to interconnect the link to said two parts of a vehicle suspension.

Said end location elements are maintained spaced apart by a first load bearing component 32 in the form of a hollow circular section tube, formed of glass filamentary reinforced plastics material similar to that of the material aforedescribed in respect of the load bearing component 14.

Each end face of the tubular component 32 lies perpendicular to the tube length and is abutted by one of a pair of cast aluminium saddle members 33 formed with an annular groove 34 in which an end of the first load bearing component is a close fit.

Each end location element 31 further comprises a resilient bush assembly 35 having inner and outer steel housings 36,37 between which there is bonded a cylindrical rubber sleeve 38. Each saddle 33 has a semi-cylindrical shaped bearing surface 39 against which the outer bush housing 37 is supported.

The aforedescribed assembly is surrounded by an outer endless band 40 of steel cord reinforced nitrile rubber of hardness 90. The length of the band 40 is such that it may be slid over the outer housings 37 of the end location elements when the latter are urged one towards the other with the first load bearing component 32 in compression therebetween. If the degree of compression of the tube 32 is greater than that which it is designed to withstand in service the endless belt 49 will at all times be under tension during subsequent operation and it is not then essential to use adhesives or other means to restrain any possible movement of the belt relative to the end location elements. However, especially where the degree of compression which may be experienced by the link when in service is such that the endless belt becomes unstressed the belt preferably is secured by adhesives or other means to the end location elements.

In this construction the spacing of the two lengths of the endless belt, as dictated by the dimension of the saddles 33, is such that said lengths lie spaced from the circular section compression resisting tube 32. In contrast to the aforedescribed embodiments the resulting space is not filled with rubber; it may be left free or alternatively filled with foam or other lightweight material if there is any risk of foreign bodies becoming entrapped in said spaces.

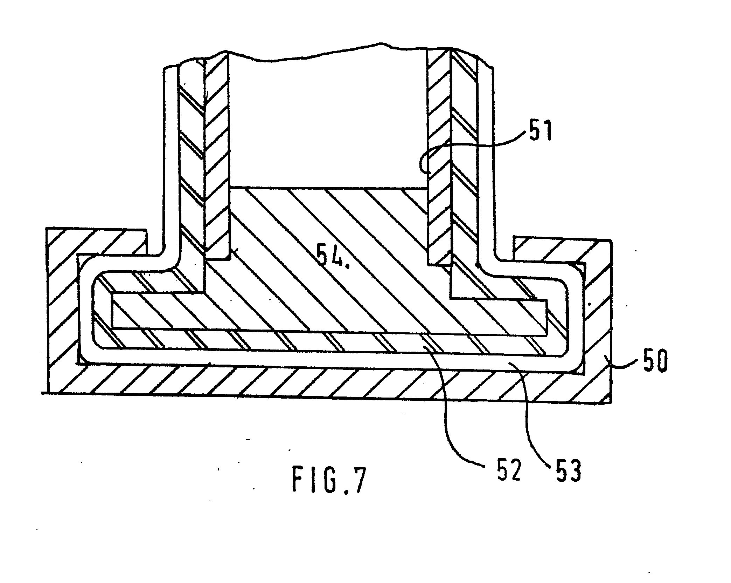

In contrast to the end location member comprising a steel bush, in a fourth embodiment, illustrated in Figure 7, a steel channel-shaped member 50 is provided for interconnecting between the rubber and plastics material of the control link.

The compression tube 51 bears against a steel end plate 54 of greater size than the cross-section of tube 51, and the rubber interlayer 52 and outer glass filament reinforced plastics band 53 extend around said plate.

The plate 54 has a width greater than the width of the opening of the channel 50 and thus assists in ensuring a positive grip between the retention channel and remainder of the control link.

By providing separate load bearing components to withstand tensile and compressive forces it is found possible to utilise materials, such as glass reinforced plastics material, which could not readily be used in place of steel or like materials in components of conventional design. In addition, the use of resilient and/or flexible material between two of the components, i.e. the first and second load bearing components, facilitates the provision of a load transmission member of unitary construction without requiring potentially damaging contact between the tensile and compressive load bearing components which inevitably tend to move one relative to the other during change of loading.

Although the invention has been described specifically in respect of a load transmission member primarily intended to transmit tensile and compressive loads, the invention may be applied also to other load transmission members, preferably also of a unitary construction, designed to transmit a combination of tensile and torsion or compressive and torsion, or compressive tensile and torsional loads.

CLAIMS:

1.    A load transmission member comprising a pair of end location elements for transmission of loads to or from the member and a first load bearing component extending between said end location elements to transmit compressive forces therebetween, characterised in that there is provided a second load bearing component (17) of filamentary reinforced matrix material extending between and around said location elements (11) for the transmission of tensile forces therebetween.

2.    A load transmission member according to Claim 1, characterised in that the second load bearing component (17) is substantially in the form of an endless belt.

3.    A load transmission member according to Claim 2, characterised in that the filamentary material of the second load bearing component (17) is disposed substantially parallel to the direction of the length of the belt and extends around the end location elements (11).

4.    A load transmission member according to any one of the preceding claims characterised in that the first load bearing component (14) lies between portions of the second load bearing component (17) which extend between the end location elements (11).

5.    .A load transmission member according to any one of the preceding claims characterised in that said first load bearing component (14) is formed of filamentary reinforced material.

6.    A load transmission member according to any one of the preceding claims characterised in that the first and second load bearing components are spaced from one another.

7. A load transmission member according to Claim 6, characterised in that the first and second load bearing components are maintained in spaced relationship by at least one element (16) of flexible material.

8. A load transmission member according to Claim 7, characterised in that said flexible material is a high hysteresis material.

9. A load transmission member according to any one of the preceding claims characterised in that the member is pre-stressed to impart residual compression to the first load bearing component.

10. A load transmission member according to any one of the preceding claims characterised in that each end load location element (11) comprises a saddle shaped member (25,33) having a first bearing surface for supporting a resilient bush (23) and a second bearing surface against which abuts an end of the first load bearing component (24).

11. A load transmission member according to Claim 10, characterised in that the saddle shaped member (33) is formed with a recess (34) in which an end of the first load bearing component (32) is located.

FIG.1

FIG.2

FIG.3

FIG.4

FIG.5

FIG.6

51

54.

50

52   53

FIG.7

## DOCUMENTS CONSIDERED TO BE RELEVANT

| Category | Citation of document with indication, where appropriate, of relevant passages | Relevant to claim |
|---|---|---|
| X | <u>US - A - 4 183 261</u> (EISELBRECHER) <br><br> * the whole document * | 1-5 |
| X | <u>FR - A - 2 452 630</u> (S.A. DE <u>RECHERCHES DE MECANIQUE APPLI-QUEE</u>) <br><br> * the whole document * | 1-5, 10 |
| P/E | & EP - A - 0 019 494 | |
| X | PATENT ABSTRACTS OF JAPAN, vol. 3, no. 42, April 12, 1979, page 109 M 55 <br> & JP - A - 54 20 259 (TORAY K.K.) (February 15, 1979) <br><br> * the whole abstract * | 1,2,4, 5,10 |
| X | <u>US - A - 3 362 252</u> (DITLINGER) <br><br> * the whole document * | 1-3,6- 8,10 |
| A | <u>US - A - 3 725 981</u> (PINCKNEY) <br><br> * column 3, line 50 - column 4, line 68; figures 1,2,4 * | 10 |
| A | <u>US - A - 4 190 479</u> (SMITH) <br><br> * figures 1,2 * | 11 |
| P/E | <u>EP - A - 0 032 162</u> (MESSERSCHMITT BÖLKOW-BLOHM A.G.) ./. | 1-8 |

**CLASSIFICATION OF THE APPLICATION (Int. Cl. ³)**

F 16 C 7/00
B 62 D 19/00
B 60 G 3/00

**TECHNICAL FIELDS SEARCHED (Int.Cl. ³)**

F 16 C
B 62 D 19/00
B 60 G
F 16 F

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 26-02-1982 | ESPEEL |

EPO Form 1503.1 06.78

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| P/E | EP - A - 0 031 413 (MESSER-SCHMITT-BÖLKOW-BLÖHM A.G.) | 1-5,10 | |
| A | US - A - 1 709 829 (CHILTON) | | |
| A | GB - A - 1 364 317 (SECRETARY OF STATE FOR DEFENCE) | | |
| A | FR - A - 2 152 289 (M.A.N.) | | |
| | ------- | | |

TECHNICAL FIELDS SEARCHED (Int. Cl.³)

EPO Form 1503.2  06.78